(19) Europäisches Patentamt
European Patent Office
Office européen des brevets

(11) **EP 4 351 827 B1**

(12) **EUROPEAN PATENT SPECIFICATION**

(45) Date of publication and mention
of the grant of the patent:
**12.11.2025 Bulletin 2025/46**

(51) International Patent Classification (IPC):
**B23D 61/06** *(2006.01)*    **B23D 61/02** *(2006.01)*
**B23D 61/04** *(2006.01)*    **B23D 65/00** *(2006.01)*

(21) Application number: **22812114.1**

(52) Cooperative Patent Classification (CPC):
**B23D 61/04; B23D 61/021; B23D 61/025;**
**B23D 61/028; B23D 65/00**

(22) Date of filing: **26.05.2022**

(86) International application number:
**PCT/US2022/031030**

(87) International publication number:
**WO 2022/251424 (01.12.2022 Gazette 2022/48)**

(54) **CIRCULAR SAW BLADE AND METHOD OF MAKING THE SAME**

KREISSÄGEBLATT UND VERFAHREN ZU SEINER HERSTELLUNG

LAME DE SCIE CIRCULAIRE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.05.2021 US 202163194532 P**

(43) Date of publication of application:
**17.04.2024 Bulletin 2024/16**

(73) Proprietor: **Apex Brands, Inc.**
**Apex, NC 27539 (US)**

(72) Inventors:
- **HICKMAN, Jeremy**
**Columbia, South Carolina 29209 (US)**
- **FIUMEFREDDO, John**
**Irmo, South Carolina 29060 (US)**
- **KALOMERIS, Chuck**
**Lexington, South Carolina 29702 (US)**

(74) Representative: **Meissner Bolte Nürnberg**
**Patentanwälte Rechtsanwälte**
**Partnerschaft mbB**
**Bankgasse 3**
**90402 Nürnberg (DE)**

(56) References cited:
WO-A1-01/70471     WO-A1-90/06839
US-A1- 2006 156 892    US-B1- 6 298 762

- **ANONYMOUS: "Makita USA - Product Details
-A-90451", 18 September 2020 (2020-09-18),
pages 1 - 2, XP093190596, Retrieved from the
Internet <URL:https://web.archive.org/web/
20200918085533/https://www.makitatools.com/
products/details/A-90451> [retrieved on
20240729]**
- **MAKITA MAKITA: "7-1/4" 28T Carbide-Tipped,
Fiber Cement Blade", 29 July 2024 (2024-07-29),
pages 1 - 2, XP093190607, Retrieved from the
Internet <URL:https://www.makitatools.com/
products/details/A-90451> [retrieved on
20240729]**

**Description**

TECHNICAL FIELD

Example embodiments generally relate to hand held power equipment and, more particularly, relate to a circular saw blade and a method of making the same.

BACKGROUND

Circular saws are commonly used in both commercial and private settings to cut lumber or perform other rigorous cutting operations. Typically employed in a construction setting, circular saws are most often powered by an electric motor that rotates a circular saw blade at relatively high speeds. The blade includes cutting teeth that engage lumber or another medium in order to cut the medium as the teeth are passed over a surface of the medium at high speed.

Makita USA - Product Details -A-90451", 18 September 2020 (2020-09-18), pages 1-2, XP093190596, retrievable from URL:https://web.ar chive.org/web /20200918085533/https://www.makita tools.com/products/details/A-90451, and Makita: "7-1/4" 28T Carbide-Tipped, Fiber Cement Blade", 29 July 2024 (2024-07-29), pages 1-2, XP093190607, retrievable from URL:https://www.makitatools.com/pro ducts/details/A-90451 discloses a circular saw blade according to the preamble of claim 1 and a method of making it according to the preamble of claim 7, and in particular provides a product specification for a 28 tooth carbide-tipped, fiber cement blade.

Given that circular saws may be employed to cut media of various types and to achieve cuts of various degrees of smoothness, the tooth pattern of the circular saw blade can be different for different applications. Circular saw blades that are designed to cut faster typically also produce a rougher cut. These blades commonly have less teeth and larger gullets between each tooth. A few examples of this type of blade include "rip-cut" blades and "framing" blades. On the other hand, circular saw blades that are designed to produce a smoother cut will typically have more teeth with smaller gullets between each tooth. Some examples of this type of blade include "crosscut" and "finishing" blades. Although circular saw blades can range in diameter from 13.97 cm (5.5 inches) to 60.96 cm (24 inches), it is common for both framing and finishing blades to have a diameter of 18.415 cm ( $7\frac{1}{4}$ inches) since this size blends the quickness of a small blade with sufficient capacity or cutting depth.

Creating a framing blade with certain qualities that may be uncharacteristic of typical framing blades may allow for a more favorable overall cutting experience than a typical framing blade could produce. However, the number of teeth is not the only concern or point of possible improvement in relation to circular saw blade design. As such, it may be desirable to explore a number of different circular saw blade design improvements that could be employed alone or together to improve overall circular saw performance.

SUMMARY

The invention is set forth in the annexed independent claims.
Preferred embodiments are defined by the dependent claims.

BRIEF SUMMARY OF SOME EXAMPLES

According to the invention, a circular saw blade as defined by claim 1 is provided, wherein the blade includes a body defined by a planar metallic plate, an arbor disposed at a center of the body defining an axis of rotation for the blade, a plurality of projections extending away from a perimeter of the body, the projections each having a leading edge and a trailing edge, and a plurality of teeth disposed at the projections such that one tooth is located at the leading edge of each of the projections. A diameter of the blade may be 18.415 cm ( $7\frac{1}{4}$ inches,) and a total of twenty-seven projections and twenty-seven teeth may be disposed at the perimeter of the body, wherein the twenty-seven teeth are provided in a three-tooth repeating pattern in which every third tooth is made of a different material than other teeth of the three-tooth pattern, andthe every third tooth is made of high-speed steel (HSS), and the other teeth are made of carbide.

According to the invention, a method of making such a circular saw blade as defined by claim 7 is also provide, wherein the method includes stamping or cutting a body from a planar metallic plate such that the body includes an arbor disposed at a center of the body defining an axis of rotation for the blade and a plurality of projections extending away from a perimeter of the body where the projections each have a leading edge and a trailing edge. The method further includes attaching teeth to the projections such that one tooth is located at the leading edge of each of the projections, where a diameter of the blade is 18.415 cm ( $7\frac{1}{4}$ inches), and a total of twenty-seven projections and twenty-seven teeth are disposed at the perimeter of the body, and by attaching the teeth comprises attaching the twenty-seven teeth in a three-tooth repeating pattern in which every third tooth is made of a different material than other teeth of the three-tooth pattern,wherein the every third tooth is made of high-speed steel (HSS), and the other teeth are made of carbide.

BRIEF DESCRIPTION OF THE SEVERAL VIEWS OF THE DRAWING(S)

Having thus described some example embodiments in general terms, reference will now be made to the accompanying drawings, which are not necessarily drawn to scale, and wherein:

> FIG. 1 illustrates a side view of a circular saw according to an example embodiment;
> FIG. 2 illustrates a side view of a saw blade in accordance with an example embodiment;
> FIG. 3 illustrates a portion of a front view of a three tooth section of the blade in accordance with an example embodiment;
> FIG. 4 illustrates a portion of a front view of a three tooth section of the blade in accordance with an example embodiment;
> FIG. 5 illustrates a portion of a side view of the blade highlighting a tooth pattern in accordance with an example embodiment;
> FIG. 6 illustrates a portion of a side view of the blade highlighting a tooth pattern in accordance with an example embodiment; and
> FIG. 7 illustrates a method of making a circular saw blade in accordance with an example embodiment.

DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

Some example embodiments may provide a circular saw blade constructed from steel and having 27 projections disposed at the periphery of the blade. In accordance with the claims, the projections include some teeth made from carbide and some other teeth made from high-speed steel (HSS). The teeth may be brazened onto the projections of the saw blade. HSS as a material is harder and can withstand higher temperatures and more impact than carbide before compromising on its integrity. Therefore, as will be discussed below, the mixed use of carbide teeth and HSS teeth with a higher overall number of teeth (i.e., 27) allows for faster cutting than a blade consisting solely of carbide teeth and/or the lower number of 24 teeth that is typical for such a blade. Additionally, teeth made from HSS may extend further out from the blade's edge than teeth made from carbide. This allows the HSS teeth to come into contact with potential debris in the cutting medium before the teeth made from carbide. Therefore, the HSS teeth enhance the overall durability of the saw blade by reducing the impact on the carbide teeth. Other improvements may also be possible, and the improvements can be made completely independent of each other, or in combination with each other in any desirable configuration. Accordingly, the operability and utility of the circular saw blade may be enhanced or otherwise facilitated while strengthening the saw blade without sacrificing the quality of the cut.

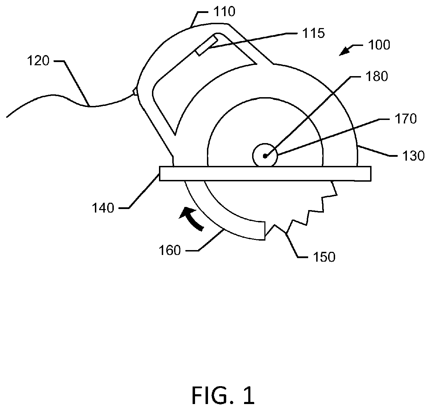

FIG. 1 illustrates side view of a circular saw 100 according to an example embodiment. As shown in FIG. 1, the circular saw 100 may include a handle 110 that an operator (not shown) may utilize to operate the circular saw 100. An operator may securely grasp the circular saw 100 by the handle 110 in order to control the circular saw 100 while making a cut. The circular saw 100 may be operably coupled to a power source 120. In some embodiments, the power source 120 may be a source of electricity that provides power to a power unit or motor (e.g. mains power or a battery pack). In some embodiments, the power unit may be an electric motor which may directly power the working assembly of the circular saw 100.

The handle 110 may be operably coupled to an upper guard 130, and the upper guard may be operably coupled to a shoe 140. The upper guard 130 and the shoe 140 may serve to improve the overall cutting experience for the operator of the circular saw 100. The shoe 140 may provide support for the circular saw 100 when the circular saw 100 is in use. The shoe 140 may also help ensure that the circular saw 100 remains in proper alignment throughout the duration of the cut, and may also serve as a guide for an operator to follow to achieve the straightest possible cut. When the circular saw 100 is in use, the shoe 140 may be in a fixed orientation and may also slide along a surface of a medium that is being cut. The shoe 140 may also be fixed at an arbitrary angle defined by the operator in order to perform angled cuts. The upper guard 130 may form a safety barrier between the operator and a blade 150 that may be capable of rotating at high speeds. The upper guard 130 may serve to keep the operator away from the blade 150, as well as protect the operator from the potential of debris being projected at high speeds away from the blade 150.

There may also be a retracting lower blade guard 160 operably coupled to the circular saw 100. The retracting lower blade guard 160 may be configured to retract into the upper guard 130, when the circular saw 100 is in use, in the direction of the arrow shown in FIG. 1. The retracting lower blade guard 160 may be pushed into a retracted state by the medium being cut as the circular saw 100 moves through the medium. The retracting lower blade guard 160 may be spring loaded or biased to completely cover the portion of the blade 150 that extends below the shoe 140 when the circular saw 100 is not in use. The blade 150 may be operably coupled to the circular saw 100 and the power unit at an arbor hole 170 at the center of the blade 150. The center of the arbor hole 170 may also contain a center of rotation 180 of the blade 150. Responsive to operation of the power unit, the blade 150 may rotate about the center of rotation 180 in order to enable the circular saw 100 to cut lumber or other materials. The blade 150 and the arbor hole 170 may form the working assembly of the circular saw 100. As such, the power unit may be operably coupled to the working assembly to rotate the blade 150 about the center of rotation 180.

The handle 110 may include a trigger 115 to facilitate operation of the power unit when the trigger 115 is actuated. In this regard, for example, when the trigger 115 is actuated (e.g., depressed), the rotating forces generated by the power unit may be coupled to the blade 150 directly. The term "trigger," as used herein, should be understood to represent any actuator that is capable of being operated by a hand or finger of the user. Thus, the trigger 115 may represent a button, switch, or other such component that can be actuated by a hand or portion thereof.

As can be appreciated from the description above, actuation of the trigger 115 may initiate rotation of the blade 150 about the center of rotation 170. Further, in some embodiments, the power unit may be an electric motor which may power the working assembly of the circular saw 100. In such embodiments, the electric motor may be directly coupled to the saw blade 150. In this regard, the circular saw 100 may not use extra gears or clutches to translate power from the electric motor to the blade 150. Thus, depressing the trigger 115 may directly engage the power unit's full power to rotating the blade 150, and releasing the trigger 115 may directly disengage all power from rotating the blade 150.

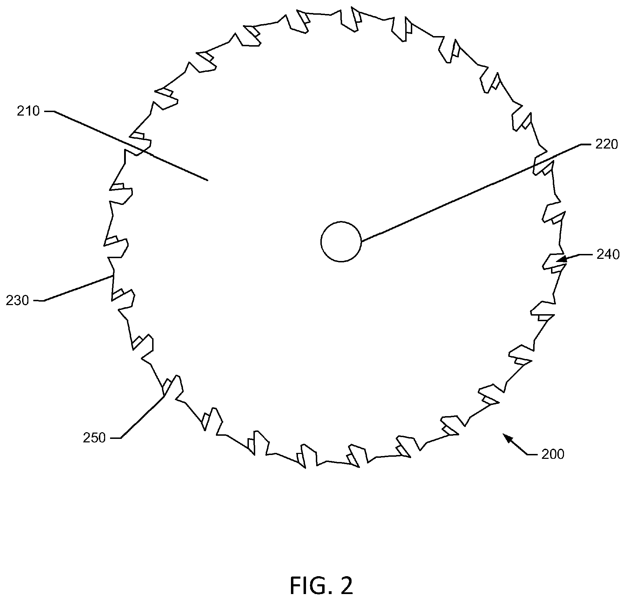

In some embodiments, the circular saw 100 may have a single-speed power unit or electric motor. Thus, an important factor in determining the relative quickness with which a cut can be completed is how the blade 150 is constructed or structured. Therefore, it may be desirable to provide various improvements to the structural arrangement of the blade 150 to improve the functionality of the blade 150 for different use cases. Various example embodiments will now be described in reference to FIGS. 2-5, which illustrate some of these example embodiments.

In this regard, FIG. 2 illustrates a side view of a blade 200 in accordance with an example embodiment. In some embodiments, a body 210 of the blade 200 may be formed from stamping or cutting the outline of the blade 200 out of steel or another sufficiently rigid and durable material. The body 210 of the blade 200 may comprise an almost entirely solid sheet of planar material excluding an arbor hole 220. In some embodiments, the body 210 may comprise slots cut through the body 210 disposed around the arbor hole 220 that do not come into contact with a periphery of the blade 200. The blade 200 includes projections 230. The projections 230 may comprise the same material as the body 210, and may also be formed in the same stamping or cutting process that forms the body 210. In this regard, the projections 230 may be solid extensions of the body 210. At its greatest length, a diameter of the blade 200 may be 18.415 cm (

$$7 \frac{1}{4}$$ inches) measured between diametrically opposite projections 230. Additionally, projections 230 have a leading edge and a trailing edge. The leading edges of the projections 230 are the first part of the projections 230 that will contact the medium being cut as the blade 200 rotates. The trailing edges, on the other hand, are the last part of the projections 230 that will pass the medium being cut as the blade 200 rotates. The blade 200 may also include a gullet 240 formed between the leading and trailing edges of all consecutive projections 230. The gullet 240 may assist with removing debris produced during a cutting operation to prevent the blade 200 from getting damaged from a buildup of debris. Additionally, the gullets 240 may prevent overheating of the blade 200 which, in turn, minimizes both the potential for the blade 200 to warp, and the potential to initiate other damage.

In an example embodiment, the projections 230 include teeth 250. Teeth 250 may be brazened, welded, or affixed by other means, onto the leading edge of the projections 230. Teeth 250 may provide the point of contact between the blade 200 and the medium that is to be cut. As such, teeth 250 may be subject to the most impact out of all the components of the blade 200. In accordance with the claims, a blade 200 comprises teeth 250 with a mixture of some teeth 250 made from carbide and some made from HSS. Teeth 250 may also be implemented into the blade in a plurality of different types and different patterns. In accordance with the claims, the blade 200 includes a 3-tooth pattern, which may help the blade 200 achieve better cutting results. This pattern will be discussed in greater detail below.

Circular saw blades may come in a plurality of shapes and sizes for different purposes. The blade 200 may either be a finishing blade or a framing blade. Finishing blades tend to have more projections 230 than framing blades, and for that reason, they may also cut slower than framing blades. Framing blades typically have 24 projections 230 and finishing blades typically have 48 projections 230. However, as a result of having more projections 230, finishing blades produce a cleaner cut than do framing blades. In the example shown in FIG. 2, the blade 200 has a diameter of 18.415 cm ( $7 \frac{1}{4}$ inches) and has a total of 27 projections 230. The increase in number of projections 230 from the common number of 24 provides a number of benefits, which will be discussed in greater detail below. In some embodiments, the size of the gullets 240 may depend on the number and size of projections 230 that are present on the blade 200. The gullets 240 may be larger or smaller than shown in FIG. 2 depending on the length of material defined between the leading and trailing edges of the blade 200 for a given number of projections 230. The size of the gullets 240 may also largely depend on the intended use of the blade 200. In this regard, a framing blade may have larger gullets 240 than a finishing blade.

The pattern with which the teeth 250 are affixed to the projections 230 may also impact the performance of the blade 200. Commonly, circular saw blades may comprise one of a flat top grind pattern, an alternate top bevel pattern, or an alternate top bevel with raker pattern. This list of teeth 250 patterns is not meant to be exhaustive, but is merely intended to provide a few common examples of circular saw teeth 250 patterns. A flat top grind pattern may not produce a clean cut, and as such, may be commonly used on framing blades. A flat top grind pattern may comprise squared off teeth 250 that are relatively flat and very durable. Alternatively, an alternate top bevel pattern may be more commonly found on finishing blades due to its ability to produce a cleaner cut. This pattern may typically comprise teeth 250 that include a beveled top face of the tooth 250. The direction of the bevel may change or alternate with each consecutive tooth 250. The alternate top bevel with raker pattern may closely resemble the alternate top bevel pattern, but may also include a raker tooth that is not beveled in either direction but rather resembles a flat top grind tooth. The raker tooth may serve to center the blade 200 in the kerf formed by operation of the blade 200 in the media being cut.

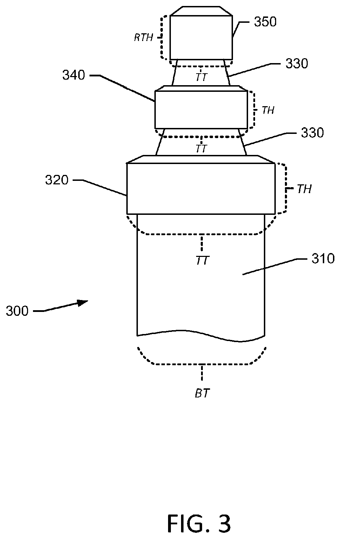

FIG. 3 illustrates a portion of a front view of a saw blade 300 with teeth (320, 340, and 350) affixed to the projections 330 in accordance with an example embodiment. In this embodiment, the pattern may resemble a 3 tooth flat top grind pattern but there may be several key improvements over common flat top grind patterns. The three tooth pattern of FIG. 3 is repeated nine times about a peripheral edge of the blade 300 for a total of 27 teeth on a 18.415 cm (7 1/4 inch) blade. A first tooth 320 and a second tooth 340 may not extend as far away from the body 310 as a raker tooth 350 does. In some embodiments, the first tooth 320 and the second tooth 340 may be positioned lower on their respective projections 330 than the raker tooth 350. In some embodiments, the raker tooth 350 may be positioned at the same height on the projection 330 yet have a higher profile *(RTH)* than the first tooth 320 *(TH)* or the second tooth 340 *(TH).* In this regard, the raker tooth 350 may still extend further away from the body 310 than the first tooth 320 or the second tooth 340. The raker tooth 350 extending further out may allow the blade 300 to produce a straighter cut by providing the blade 300 with more opportunities to center itself in the kerf formed in the cutting medium with each rotation of the blade 300 than a 24 tooth blade. In this regard, one extra centering operation is performed for every full revolution of the blade 300. The additional centering operation tends to improve the straightness of the cut. However, in some alternative embodiments, the first tooth 320 or the second tooth 340 may extend further away from the body 310 than the raker tooth 350.

In an example embodiment, the raker tooth 350 may comprise HSS while the first tooth 320 and the second tooth 340 may each comprise carbide. In some embodiments, it may be helpful to form the raker tooth 350 from a material harder than carbide because the raker tooth 350 may be the first part of the blade 300 that makes contact with nails or other objects embedded in the cutting medium. In this regard, since the raker tooth 350 (in this example) has the higher profile *(RTH),* the raker tooth 350 is first to contact harder objects that may be embedded in the cutting medium. Meanwhile, the raker tooth 350 being made from HSS makes the raker tooth 350 harder than the first tooth 320 and the second tooth 340. Therefore, the raker tooth 350 may be better suited to take the impact of any hard objects or inconsistencies in the cutting medium. In this regard, the raker tooth 350 may be subject to more impact than the first tooth 320 and the second tooth 340, and may correspondingly be made of a stronger material to enable the raker tooth 350 to handle such impact. In some embodiments, since the blade 300 includes 27 total teeth (instead of the typical 24), and since a plurality of raker teeth 350 (in this case 1/3 of them), are made of HSS and therefore stronger material, each raker tooth 350 may not only be designed to handle greater impact, but may advantageously handle less impact per revolution of the blade 300 since there is one extra raker tooth 350 above the normal amount. Thus, the amount of impact that each tooth (320, 340 and 350) takes per full rotation of the blade 300 may be drastically reduced generally, but the amount specifically felt by each raker tooth 350 is also reduced. In this regard, with less impact per tooth (320, 340 and 350) the raker teeth 350 may improve the overall durability and/or longevity of the blade 300. Additionally, teeth 320, 340 and 350 may be wider than the body 310 of the blade 300 in an effort to minimize the amount of material that sticks to the body 310 during cutting. In this regard, the body 310 may have a thickness *BT* which may be less than the thickness *TT* of the teeth (320, 340 and 350).

In accordance with this example embodiment, the raker tooth 350 may be more adequately equipped to cut through debris that may be embedded in the cutting medium. In some cases, the debris may comprise nails or other inconsistencies in the lumber or material being cut. In some embodiments, the 3 tooth pattern shown in FIG. 3 may be repeated to a total of 27 projections 330 around the blade 300. In this regard, this configuration may comprise more projections 330 than a standard framing blade, which may commonly comprise 24 projections 330. Due to the increased number of total projections 330, and a higher number of raker teeth 350, the blade 300 may have greater durability, produce straighter cuts, and have a greater ability to cut through media of various types and possibly also including embedded objects therein. In some embodiments, it may be helpful to remain close to the typical number of projections 330 of a common framing blade to offer the above improvements without compromising on the speed of the cut. Additionally, HSS may cost more from a production standpoint. In this regard, implementing HSS in patterns with the more cost efficient carbide may be helpful in balancing the cost of the blade 300 with the performance of the blade 300. As mentioned above, finishing blades typically have more projections 330 than framing blades (i.e., twice as many), which allows for cleaner finishes on cuts. Accordingly, having a blade 300 that comprises 27 projections 330 as opposed to 24 projections 330, may allow for a better quality finish from the blade 300, without compromising a great deal in other aspects of the blade 300 as discussed above. In other words, the blade having 27 projections 330 may blend some desirable traits of both framing blades and finishing blades.

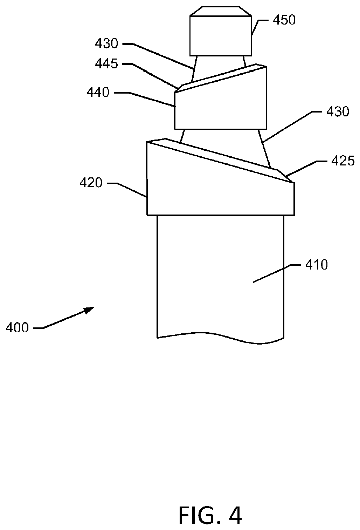

FIG. 4 illustrates a portion of a front view of a saw blade 400 with teeth (420, 440, and 450) affixed to the projections 430 in accordance with an example embodiment. In this embodiment, the tooth pattern may resemble a 3 tooth alternate top bevel with raker pattern, but again, there may be several key improvements over common alternate top bevel with raker patterns. In some embodiments, the first tooth 420 may have a top face 425 that may be cut at a bevel. The second tooth 440 may also have a top face 445 that may be cut at a bevel, but in the opposite direction. Alternating the direction of the bevel on the first tooth 420 and the second tooth 440 may enhance the quality of the cut by enabling each alternating tooth 430 to cut a different corner of the kerf of the blade 400. A first tooth 420 and a second tooth 440 may not extend as far away from the body 410 as a raker tooth 450 does. In some embodiments, the first tooth 420 and the second tooth 440 may be positioned lower on their respective projections 430 than the raker tooth 450. In some embodiments, the raker tooth 450 may be positioned at the same height on the projection 430 yet have a higher profile than the first tooth 420 or the second tooth 440. In this regard, the raker tooth 450 may still extend further away from the body 410 than the first tooth 420 or the second tooth 440. The raker tooth 450 extending further out may allow the blade 400 to produce a straighter cut by providing the blade 400 with more opportunities to center itself in the cutting medium with each rotation of the blade 400. However, in some further embodiments, the first tooth 420 or the second tooth 440 may extend further away from the body 410 than the raker tooth 450.

In an example embodiment, the raker tooth 450 may comprise HSS while the first tooth 420 and the second tooth 440 may each comprise carbide. In some embodiments, it is helpful that the raker tooth 450 comprises a material harder than carbide because the raker tooth 450 may be the first part of the blade 400 that makes contact with nails or other objects embedded in the cutting medium. Therefore, the raker tooth 450 may be better suited to take the impact of any debris or inconsistencies in the cutting medium if the raker tooth 450 were to comprise a harder material, such as HSS. In this regard, the raker tooth 450 may be subject to more impact than the first tooth 420 and the second tooth 440. In some embodiments, since the blade 400 may include a plurality of raker teeth 450, of which, each may be designed to handle greater impact, the amount of impact that each tooth (420, 440 and 450) takes per full rotation of the blade 400 may be drastically reduced. In this regard, with less impact per tooth (420, 440 and 450) the raker teeth 450 may improve the overall durability and/or longevity of the blade 400. Additionally, teeth 420, 440 and 450 may be wider than the body 410 of the blade 400 in an effort to minimize the amount of material that sticks to the body 410 during cutting.

In accordance with this example embodiment, the raker tooth 450 may be more adequately equipped to cut through debris that may be embedded in the cutting medium. In some cases, the debris may comprise nails or other inconsistencies in the lumber or material being cut. In some embodiments, the 3 tooth pattern shown in FIG. 4 may be repeated to a total of 27 projections 430 around the blade 400. In this regard, this configuration may comprise more projections 430 than a standard framing blade, which may commonly comprise 24 projections 430. Due to the increased number of total projections 430, and a higher number of raker teeth 450, the blade 400 may have greater durability, produce straighter cuts, and a greater ability to cut through debris. In some embodiments, it may be helpful to remain close to the typical number of projections 430 of a common framing blade to offer the above improvements without compromising on the speed of the cut. Additionally, HSS may cost more from a production standpoint. In this regard, implementing HSS in patterns with the more cost efficient carbide may be helpful in balancing the cost of the blade 400 with the performance of the blade 400. As mentioned above, finishing blades typically have more projections 430 than framing blades, which allows for cleaner finishes on cuts. Accordingly, having a blade 400 that comprises 27 projections 430 as opposed to 24 projections 430, may allow for a better quality finish from the blade 400, without compromising a great deal in other aspects of the blade 400 as discussed above. In other words, the blade having 27 projections 430 may blend some desirable traits of both framing blades and finishing blades.

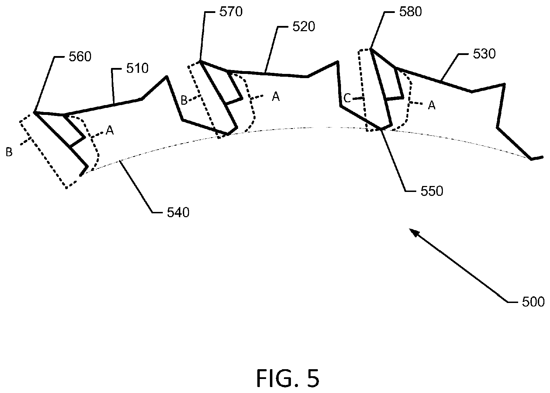

FIG. 5 illustrates a portion of a side view of the blade 500 highlighting the projections (510, 520 and 530) according to an example embodiment. In accordance with the example embodiments described herein, FIG. 5 illustrates more precise geometry in relation to the patterns described above. In such embodiments, each of the first projection 510, the second projection 520, and the third projection 530 may extend to a same height (A) above an imaginary reference curve 540 defined by connecting the bottoms of gullets 550. The first tooth 560 and the second tooth 570 may each extend to a height (B) above the reference curve 540. This height, however, may be less than maximum height (C) which is associated with the raker tooth 580. The pattern depicted in FIG. 5 may then be repeated until the periphery of the blade 500 comprises 27 total projections (510, 520, and 530). In an example embodiment, a diameter of the blade 500 between outermost tips of height (C) above may be about 18.2118 cm (7.17 inches) to about 18.4912 cm (7.28 inches). Meanwhile, the diameter of the blade 500 between outermost tips of height (B) may be about 18.1102 cm (7.13 inches) to about 18.3896 cm (7.24 inches). In an example embodiment, the difference between height (B) and height (C) may be between about 0.1 mm to about 0.2 mm (therefore 0.2 to 0.4 mm diametrical) regardless of where in the ranges noted above each respective height ((B) and (C)) happens to fall.

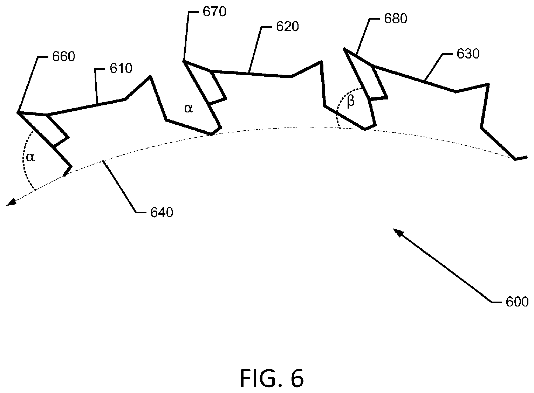

FIG. 6 illustrates a portion of a side view of the blade 600 highlighting the projections (610, 620 and 630) according to an example embodiment. In accordance with the example embodiments described herein, FIG. 6 illustrates more precise geometry in relation to the pitch of the teeth formed on the projections 610, 620 and 630. In such embodiments, each of the first projection 610, and the second projection 620, may comprise teeth 660 and 670, respectively, that may be positioned at a first angle $\alpha$ relative to a line tangent to reference perimeter line 640. The third projection 630 may comprise a tooth 680 that may be positioned at an angle $\beta$ that is less than the first angle $\alpha$. These different pitch angles may define different degrees of aggressiveness with which the corresponding teeth attack or bite into the cutting medium. For example, the first angle $\alpha$ may be greater than the second angle $\beta$, and therefore the tooth 680 may more aggressively bite into the cutting medium. In this regard, tooth 680 may be angled to lean more towards the direction of rotation of the blade 600 than tooth 660 or tooth 670. The pattern depicted in FIG. 6 may then be repeated until the periphery of the blade 600 comprises 27 total projections (610, 620, and 630) and teeth.

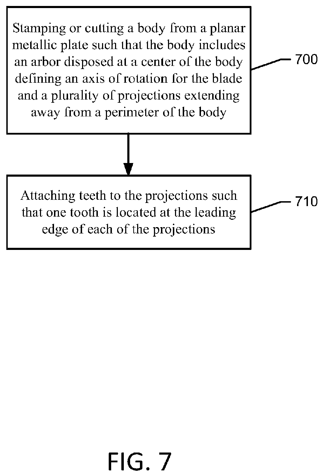

FIG. 7 illustrates a block diagram of a method of forming a circular saw blade in accordance with an example embodiment in accordance with claim 7. The method includes stamping or cutting a body from a planar metallic plate such that the body includes an arbor disposed at a center of the body defining an axis of rotation for the blade and a plurality of projections extending away from a perimeter of the body at operation 700. In this context, the projections each have a leading edge and a trailing edge. The method further includes attaching teeth to the projections such that one tooth is located at the leading edge of each of the projections at operation 710.

In this context, a diameter of the blade is 18.415 cm ( $7\frac{1}{4}$ inches), and a total of twenty-seven projections and twenty-seven teeth are disposed at the perimeter of the body.

Some example embodiments in accordance with claim 1 provide for a circular saw blade. The blade includes a body defined by a planar metallic plate, an arbor disposed at a center of the body defining an axis of rotation for the blade, a plurality of projections extending away from a perimeter of the body, the projections each having a leading edge and a trailing edge, and a plurality of teeth disposed at the projections such that one tooth is located at the leading edge of each of the projections. A diameter of the blade is 18.415 cm ( $7\frac{1}{4}$ inches), and a total of twenty-seven projections and twenty-seven teeth are be disposed at the perimeter of the body.

The blade of some embodiments may include additional features, modifications, augmentations and/or the like to achieve further objectives or enhance performance of the blade. The additional features, modifications, augmentations and/or the like may be added in any combination with each other. Below is a list of various additional features, modifications, and augmentations that can each be added individually or in any combination with each other. For example, a number of teeth per cm (inch) disposed at the perimeter of the body may be greater than 1.397 (0.55). In accordance with the claims, the twenty-seven teeth are provided in a three-tooth repeating pattern in which every third tooth is made of a different material than other teeth of the three-tooth pattern. In accordance with the claims, the every third tooth may be made of high-speed steel (HSS), and the other teeth are made of carbide. In an example embodiment, the every third tooth may extend farther away from the body than the other teeth. In some cases, the every third tooth may be aligned with a plane of the body, and adjacent ones of the other teeth may be bevel cut in opposite directions. In an example embodiment, the every third tooth may have a first pitch angle and the other teeth have a second pitch angle that is different than the first pitch angle. In some cases, the first pitch angle may be less than the second pitch angle. In an example embodiment, each of the teeth may have a width that is wider than a width of the body. In some cases, each of the teeth have equal lengths, or the every third tooth may be longer than the other teeth. In an example embodiment, the twenty-seven teeth are welded or brazed onto the leading edge of respective ones of the twenty-seven projections.

Many modifications and other embodiments of the inventions set forth herein will come to mind to one skilled in the art, as far as they fall within the scope of the invention as defined by the claims.

## Claims

1. A circular saw blade (150; 200; 300; 400; 500; 600) comprising:

a body (210) defined by a planar metallic plate;

an arbor (220) disposed at a center of the body (210) defining an axis of rotation for the blade (150; 200; 300; 400; 500; 600);

a plurality of projections (230; 510, 520, 530; 610, 620, 630) extending away from a perimeter of the body (210), the projections (230; 510, 520, 530; 610, 620, 630) each having a leading edge and a trailing edge; and

a plurality of teeth (250; 320, 340, 350; 420, 440, 450; 560, 570, 580; 660, 670, 680) disposed at the projections (230; 510, 520, 530; 610, 620, 630) such that one tooth is located at the leading edge of each of the projections (230; 510, 520, 530; 610, 620, 630),

wherein

a diameter of the blade (150; 200; 300; 400; 500; 600) is 18.415 cm ($7\frac{1}{4}$ inches),

**characterized by**

a total of twenty-seven projections (230; 510, 520, 530; 610, 620, 630) and twenty-seven teeth (250; 320, 340, 350) are disposed at the perimeter of the body (210),

the twenty-seven teeth (250; 320, 340, 350; 420, 440, 450; 560, 570, 580; 660, 670, 680) are provided in a three-tooth repeating pattern in which every third tooth is made of a different material than other teeth of the three-tooth pattern, and

the every third tooth is made of high-speed steel (HSS), and the other teeth are made of carbide.

2. The blade (150; 200; 300; 400; 500; 600) of claim 1, wherein a number of teeth per cm (inch) disposed at the perimeter of the body (210) is greater than 1.397 (0.55).

3. The blade (150; 200; 300; 400; 500; 600) of claim 1, wherein the every third tooth extends farther away from the body (210) than the other teeth, wherein in particular the every third tooth is aligned with a plane of the body (210), and

wherein in particular adjacent ones of the other teeth are bevel cut in opposite directions.

4. The blade (150; 200; 300; 400; 500; 600) of claim 1, wherein the every third tooth has a first pitch angle and the other teeth have a second pitch angle that is different than the first pitch angle, wherein in particular the first pitch angle is less than the second pitch angle.

5. The blade (150; 200; 300; 400; 500; 600) of claim 1, wherein each of the teeth (250; 320, 340, 350; 420, 440, 450; 560, 570, 580; 660, 670, 680) has a width that is wider than a width of the body (210), wherein in particular each of the teeth (250; 320, 340, 350; 420, 440, 450; 560, 570, 580; 660, 670, 680) have equal lengths or wherein in particular the every third tooth is longer than the other teeth.

6. The blade (150; 200; 300; 400; 500; 600) of claim 1, wherein the twenty-seven teeth (250; 320, 340, 350; 420, 440, 450; 560, 570, 580; 660, 670, 680) are welded or brazed onto the leading edge of respective ones of the twenty-seven projections (230; 510, 520, 530; 610, 620, 630).

7. A method of making a circular saw blade (150; 200; 300; 400; 500; 600), the method comprising:

stamping or cutting (700) a body (210) from a planar metallic plate such that the body (210) includes an arbor (220) disposed at a center of the body (210) defining an axis of rotation for the blade (150; 200; 300; 400; 500; 600) and a plurality of projections (230; 510, 520, 530; 610, 620, 630) extending away from a perimeter of the body (210), the projections (230; 510, 520, 530; 610, 620, 630) each having a leading edge and a trailing edge; and

attaching (710) teeth (250; 320, 340, 350; 420, 440, 450; 560, 570, 580; 660, 670, 680) to the projections (230; 510, 520, 530; 610, 620, 630) such that one tooth is located at the leading edge of each of the projections (230; 510, 520, 530; 610, 620, 630),

wherein

a diameter of the blade (150; 200; 300; 400; 500; 600) is 18.415 cm (7-1/4 inches), **characterized by**

a total of twenty-seven projections (230; 510, 520, 530; 610, 620, 630) and twenty-seven teeth (250; 320, 340, 350; 420, 440, 450; 560, 570, 580; 660, 670, 680) are disposed at the perimeter of the body (210),

and by

attaching the teeth (250; 320, 340, 350; 420, 440, 450; 560, 570, 580; 660, 670, 680) comprises attaching the twenty-seven teeth (250; 320, 340, 350; 420, 440, 450; 560, 570, 580; 660, 670, 680) in a three-tooth repeating pattern in which every third tooth is made of a different material than other teeth of the three-tooth pattern,

wherein the every third tooth is made of high-speed steel (HSS), and the other teeth are made of carbide.

8. The method of claim 7, wherein attaching the teeth (250; 320, 340, 350; 420, 440, 450; 560, 570, 580; 660, 670, 680) comprises welding or brazing the teeth (250; 320, 340, 350; 420, 440, 450; 560, 570, 580; 660, 670, 680) onto the leading edge of respective ones of the twenty-seven projections (230; 510, 520, 530; 610, 620, 630).

9. The method of claim 7, wherein the every third tooth extends farther away from the body (210) than the other teeth.

10. The method of claim 7, wherein the every third tooth has a first pitch angle and the other teeth have a second pitch angle that is different than the first pitch angle.


**Patentansprüche**

1. Kreissägeblatt (150; 200; 300; 400; 500; 600), umfassend:

   einen Körper (210), der durch eine ebene Metallplatte definiert ist;
   einen Dorn (220), der in der Mitte des Körpers (210) angeordnet ist und eine Drehachse für das Sägeblatt definiert (150; 200; 300; 400; 500; 600);
   eine Vielzahl von Vorsprüngen (230; 510, 520, 530; 610, 620, 630), die sich von einem Umfang des Körpers (210) weg erstrecken, wobei die Vorsprünge (230; 510, 520, 530; 610, 620, 630) jeweils eine führende Kante und eine nachlaufende Kante aufweisen; und
   eine Vielzahl von Zähnen (250; 320, 340, 350; 420, 440, 450; 560, 570, 580; 660, 670, 680), die an den Vorsprüngen (230; 510, 520, 530; 610, 620, 630) angeordnet sind, so dass sich ein Zahn an der führenden Kante jedes der Vorsprünge (230; 510, 520, 530; 610, 620, 630) befindet,
   wobei der Durchmesser des Sägeblattes (150; 200; 300; 400; 500; 600) 18,415 cm ( $7\frac{1}{4}$ Zoll) beträgt,
   **dadurch gekennzeichnet, dass**
   insgesamt siebenundzwanzig Vorsprünge (230; 510, 520, 530; 610, 620, 630) und siebenundzwanzig Zähne (250; 320, 340, 350) am Umfang des Körpers (210) angeordnet sind,
   wobei die siebenundzwanzig Zähne (250; 320, 340, 350; 420, 440, 450; 560, 570, 580; 660, 670, 680) in einem sich wiederholenden Dreizahnmuster bereitgestellt werden, wobei jeder dritte Zahn aus einem anderen Material als die anderen Zähne des Dreizahnmusters besteht, und
   der jede dritte Zahn aus Schnellarbeitsstahl (HSS) besteht und die anderen Zähne aus Karbid bestehen.

2. Kreissägeblatt (150; 200; 300; 400; 500; 600) nach Anspruch 1, wobei die Anzahl der Zähne pro cm (Zoll), die am Umfang des Körpers (210) angeordnet sind, größer als 1,397 (0,55) ist.

3. Kreissägeblatt (150; 200; 300; 400; 500; 600) nach Anspruch 1, wobei der jede dritte Zahn weiter vom Körper (210) entfernt ist als die anderen Zähne, wobei insbesondere der jede dritte Zahn mit einer Ebene des Körpers (210) ausgerichtet ist, und wobei insbesondere benachbarte der anderen Zähne in entgegengesetzte Richtungen abgeschrägt sind.

4. Kreissägeblatt (150; 200; 300; 400; 500; 600) nach Anspruch 1, wobei der jede dritte Zahn einen ersten Steigungswinkel und die anderen Zähne einen zweiten Steigungswinkel aufweisen, der sich vom ersten Steigungswinkel unterscheidet, wobei insbesondere der erste Steigungswinkel kleiner ist als der zweite Steigungswinkel.

5. Kreissägeblatt (150; 200; 300; 400; 500; 600) nach Anspruch 1, wobei jeder der Zähne (250; 320, 340, 350; 420, 440, 450; 560, 570, 580; 660, 670, 680) eine Breite aufweist, die größer ist als eine Breite des Körpers (210), wobei insbesondere jeder der Zähne (250; 320, 340, 350; 420, 440, 450; 560, 570, 580; 660, 670, 680) gleiche Längen aufweist oder wobei insbesondere der jede dritte Zahn länger ist als die anderen Zähne.

6. Kreissägeblatt (150; 200; 300; 400; 500; 600) nach Anspruch 1, wobei die siebenundzwanzig Zähne (250; 320, 340, 350; 420, 440, 450; 560, 570, 580; 660, 670, 680) an die führende Kante der jeweiligen der siebenundzwanzig Vorsprünge (230; 510, 520, 530; 610, 620, 630) geschweißt oder gelötet sind.

7. Verfahren zur Herstellung eines Kreissägeblatts (150; 200; 300; 400; 500; 600), das Verfahren umfassend:

   Stanzen oder Schneiden (700) eines Körpers (210) aus einer ebenen Metallplatte, so dass der Körper (210) einen Dorn (220) umfasst, der in der Mitte des Körpers (210) angeordnet ist und eine Drehachse für das Kreissägeblatt (150; 200; 300; 400; 500; 600) definiert, und eine Vielzahl von Vorsprüngen (230; 510, 520, 530; 610, 620, 630) aufweist, die sich von einem Umfang des Körpers (210) weg erstrecken, wobei die Vorsprünge (230; 510, 520, 530; 610, 620, 630) jeweils eine führende Kante und eine nachlaufende Kante aufweisen; und
   Befestigen (710) von Zähnen (250; 320, 340, 350; 420, 440, 450; 560, 570, 580; 660, 670, 680) an den Vorsprüngen (230; 510, 520, 530; 610, 620, 630) so, dass sich ein Zahn an der führenden Kante jedes der Vorsprünge (230; 510, 520, 530; 610, 620, 630) befindet,
wobei der Durchmesser des Kreissägeblatts (150; 200; 300; 400; 500; 600) 18,415 cm ( $7\frac{1}{4}$ Zoll) beträgt,

**dadurch gekennzeichnet, dass**
insgesamt siebenundzwanzig Vorsprünge (230; 510, 520, 530; 610, 620, 630) und siebenundzwanzig Zähne (250; 320, 340, 350; 420, 440, 450; 560, 570, 580; 660, 670, 680) am Umfang des Körpers (210) angeordnet sind,
**und dadurch, dass**
das Befestigen der Zähne (250; 320, 340, 350; 420, 440, 450; 560, 570, 580; 660, 670, 680) das Anbringen der siebenundzwanzig Zähne (250; 320, 340, 350; 420, 440, 450; 560, 570, 580; 660, 670, 680) in einem sich wiederholenden Dreizahnmuster umfasst, wobei jeder dritte Zahn aus einem anderen Material als die anderen Zähne des Dreizahnmusters besteht, wobei der jede dritte Zahn aus Schnellarbeitsstahl (HSS) besteht und die anderen Zähne aus Karbid bestehen.

8. Verfahren nach Anspruch 7, wobei das Anbringen der Zähne (250; 320, 340, 350; 420, 440, 450; 560, 570, 580; 660, 670, 680) das Schweißen oder Löten der Zähne (250; 320, 340, 350; 420, 440, 450; 560, 570, 580; 660, 670, 680) an die führende Kante der jeweils entsprechenden der siebenundzwanzig Vorsprünge (230; 510, 520, 530; 610, 620, 630 umfasst.

9. Verfahren nach Anspruch 7, wobei der jede dritte Zahn weiter vom Körper (210) entfernt ist als die anderen Zähne.

10. Verfahren nach Anspruch 7, wobei der jede dritte Zahn einen ersten Steigungswinkel und die anderen Zähne einen zweiten Steigungswinkel aufweisen, der sich vom ersten Steigungswinkel unterscheidet.

## Revendications

1. Lame de scie circulaire (150 ; 200 ; 300 ; 400 ; 500 ; 600) comprenant :

un corps (210) défini par une plaque métallique plane ;
un arbre (220) disposé au centre du corps (210) définissant un axe de rotation pour la lame de scie circulaire (150 ; 200 ; 300 ; 400 ; 500 ; 600);
une pluralité de saillies (230 ; 510, 520, 530 ; 610, 620, 630) s'étendant à partir d'un périmètre du corps (210), les saillies (230 ; 510, 520, 530 ; 610, 620, 630) ayant chacune un bord d'attaque et un bord de fuite ; et
une pluralité de dents (250 ; 320, 340, 350 ; 420, 440, 450 ; 560, 570, 580 ; 660, 670, 680) disposées au niveau des saillies (230 ; 510, 520, 530 ; 610, 620, 630)
560, 570, 580 ; 660, 670, 680) disposées au niveau des saillies (230 ; 510, 520, 530 ; 610, 620, 630) de telle sorte qu'une dent soit située au niveau du bord avant de chacune des saillies (230 ; 510, 520, 530 ; 610, 620, 630),
dans lequel le diamètre de la lame de scie circulaire (150 ; 200 ; 300 ; 400 ; 500 ; 600) est de 18,415 cm ( $7\frac{1}{4}$ pouces),

**caractérisé par**
un total de vingt-sept saillies (230 ; 510, 520, 530 ; 610, 620, 630) et vingt-sept dents (250 ; 320, 340, 350) sont disposées sur le périmètre du corps (210),
les vingt-sept dents (250 ; 320, 340, 350 ; 420, 440, 450 ; 560, 570, 580 ; 660, 670, 680) sont disposées selon un motif répétitif de trois dents dans lequel chaque troisième dent est fabriquée dans un matériau différent de celui des autres dents du motif de trois dents, et
chaque troisième dent est fabriquée en acier rapide (HSS), tandis que les autres dents sont fabriquées en carbure.

2. Lame de scie circulaire (150 ; 200 ; 300 ; 400 ; 500 ; 600) selon la revendication 1, dans laquelle le nombre de dents par cm (pouce) disposées à la périphérie du corps (210) est supérieur à 1,397 (0,55).

3. Lame de scie circulaire (150 ; 200 ; 300 ; 400 ; 500 ; 600) de la revendication 1, dans laquelle chaque troisième dent s'étend plus loin du corps (210) que les autres dents, dans laquelle en particulier chaque troisième dent est alignée avec un plan du corps (210), et
dans laquelle en particulier les dents adjacentes parmi les autres dents sont coupées en biseau dans des directions opposées.

4. Lame de scie circulaire (150 ; 200 ; 300 ; 400 ; 500 ; 600) selon la revendication 1, dans laquelle chaque troisième dent a un premier angle d'inclinaison et les autres dents ont un deuxième angle d'inclinaison qui est différent du premier angle d'inclinaison, dans laquelle en particulier le premier angle d'inclinaison est inférieur au deuxième angle d'inclinaison.

5. Lame de scie circulaire (150 ; 200 ; 300 ; 400 ; 500 ; 600) selon la revendication 1, dans laquelle chacune des dents (250 ; 320, 340, 350 ; 420, 440, 450 ; 560, 570, 580 ; 660, 670, 680) a une largeur qui est plus grande que la largeur du corps (210), dans laquelle en particulier chacune des dents (250 ; 320, 340, 350 ; 420, 440, 450 ; 560, 570, 580 ; 660, 670, 680) ont des longueurs égales ou dans lequel, en particulier, chaque troisième dent est plus longue que les autres dents.

6. Lame de scie circulaire (150 ; 200 ; 300 ; 400 ; 500 ; 600) selon la revendication 1, dans laquelle les vingt-sept dents (250 ; 320, 340, 350 ; 420, 440, 450 ; 560, 570, 580 ; 660, 670, 680) sont soudées ou brasées sur le bord avant de chacune des vingt-sept saillies (230 ; 510, 520, 530 ; 610, 620, 630).

7. Procédé de fabrication d'une lame de scie circulaire (150 ; 200 ; 300 ; 400 ; 500 ; 600), le procédé comprenant:

   l'estampage ou la découpe (700) d'un corps (210) à partir d'une plaque métallique plane de telle sorte que le corps (210) comprenne un arbre (220) disposé au centre du corps (210) définissant un axe de rotation pour la lame de scie circulaire (150 ; 200 ; 300 ; 400 ; 500 ; 600) et une pluralité de saillies (230 ; 510, 520, 530 ; 610, 620, 630) s'étendant à partir d'un périmètre du corps (210), les saillies (230 ; 510, 520, 530 ; 610, 620, 630) ayant chacune un bord d'attaque et un bord de fuite ; et
   la fixation (710) de dents (250 ; 320, 340, 350 ; 420, 440, 450 ; 560, 570, 580 ; 660, 670, 680) aux saillies (230 ; 510, 520, 530 ; 610, 620, 630) de telle sorte qu'une dent soit située au niveau du bord avant de chacune des saillies (230 ; 510, 520, 530 ; 610, 620, 630),
   dans lequel le diamètre de la lame de scie circulaire (150 ; 200 ; 300 ; 400 ; 500 ; 600) est de 18,415 cm ( $7\frac{1}{4}$ pouces),

   **caractérisé par**
   un total de vingt-sept saillies (230 ; 510, 520, 530 ; 610, 620, 630) et vingt-sept dents (250 ; 320, 340, 350 ; 420, 440, 450 ; 560, 570, 580 ; 660, 670, 680) sont disposées à la périphérie du corps (210),
   **et par**
   la fixation des dents (250 ; 320, 340, 350 ; 420, 440, 450 ; 560, 570, 580 ; 660, 670, 680) comprend la fixation des vingt-sept dents (250 ; 320, 340, 350 ; 420, 440, 450 ; 560, 570, 580 ; 660, 670, 680) selon un motif répétitif de trois dents dans lequel chaque troisième dent est fabriquée dans un matériau différent de celui des autres dents du motif de trois dents,
   dans lequel chaque troisième dent est fabriquée en acier rapide (HSS) et les autres dents sont fabriquées en carbure.

8. Procédé selon la revendication 7, dans lequel la fixation des dents (250 ; 320, 340, 350 ; 420, 440, 450 ; 560, 570, 580 ; 660, 670, 680) comprend le soudage ou le brasage des dents (250 ; 320, 340, 350 ; 420, 440, 450 ; 560, 570, 580 ; 660, 670, 680) sur le bord avant de chacune des vingt-sept saillies respectives (230 ; 510, 520, 530 ; 610, 620, 630).

9. Procédé selon la revendication 7, dans lequel chaque troisième dent s'étend plus loin du corps (210) que les autres dents.

10. Procédé selon la revendication 7, dans lequel chaque troisième dent a un premier angle d'inclinaison et les autres dents ont un deuxième angle d'inclinaison qui est différent du premier angle d'inclinaison.

FIG. 1

FIG. 2

FIG. 3

FIG. 4

FIG. 5

FIG. 6

Stamping or cutting a body from a planar
metallic plate such that the body includes
an arbor disposed at a center of the body
defining an axis of rotation for the blade
and a plurality of projections extending
away from a perimeter of the body

— 700

Attaching teeth to the projections such
that one tooth is located at the leading
edge of each of the projections

— 710

# FIG. 7

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Makita USA - Product Details -A-90451*, 18 September 2020, 1-2, https://web.archive.org/web/20200918085533/https://www.makitatools.com/-products/details/A-90451

- **MAKITA**. *7-1/4" 28T Carbide-Tipped, Fiber Cement Blade*, 29 July 2024, 1-2, https://www.makitatools.com/products/details/A-90451